# EUROPÄISCHE PATENTSCHRIFT

(11) **EP 1 254 387 B1**
(45) Veröffentlichungstag und Bekanntmachung des Hinweises auf die Patenterteilung: **02.08.2006**
(21) Anmeldenummer: 00902522.2
(22) Anmeldetag: 11.02.2000
(51) Int. Cl.: G02B 6/38

(54) **OPTISCHER STECKVERBINDER ZUM GLEICHZEITIGEN VERBINDEN EINER MEHRZAHL VON FASEROPTISCHEN KABELN SOWIE EINSATZ FÜR EINEN SOLCHEN STECKVERBINDER**
OPTICAL CONNECTOR FOR SIMULTANEOUSLY CONNECTING A PLURALITY OF FIBER OPTICAL CABLES AND ADAPTER FOR SAID CONNECTOR
CONNECTEUR OPTIQUE POUR LA CONNEXION SIMULTANEE D'UNE PLURALITE DE CABLES A FIBRES OPTIQUES AINSI QU'INSERT POUR UN TEL CONNECTEUR

(43) Veröffentlichungstag der Anmeldung: 06.11.2002
(73) Patentinhaber: HUBER & SUHNER AG, 9100 Herisau (CH)
(72) Erfinder: SCHMALZIGAUG, Thomas, CH-9016 St. Gallen (CH); KOCH, Beat, CH-9104 Waldstadt (CH)
(74) Vertreter: Ottow, Jens M.
(86) Internationale Anmeldenummer: PCT/CH2000/000078
(87) Internationale Veröffentlichungsnummer: WO 2001/059499

(56) Entgegenhaltungen:
- EP-A- 0 061 243
- EP-A- 0 430 107
- EP-A- 0 689 069
- US-A- 4 953 941
- US-A- 5 287 425
- US-A- 5 528 712
- US-A- 5 581 645
- US-A- 5 953 475
- PATENT ABSTRACTS OF JAPAN vol. 008, no. 282 (P-323), 22. Dezember 1984 (1984-12-22) & JP 59 148019 A (NAIRUSU BUHIN KK), 24. August 1984 (1984-08-24)

## Beschreibung

### TECHNISCHES GEBIET

Die vorliegende Erfindung bezieht sich auf das Gebiet Faseroptik. Sie betrifft einen optischen Steckverbinder zum gleichzeitigen Verbinden einer Mehrzahl von faseroptischen Kabeln gemäss dem Oberbegriff des Anspruchs 1 sowie einen Einsatz für einen solchen Steckverbinder.

Ein solcher Steckverbinder ist z.B. aus den Druckschriften US-A-5,436,993 oder US-A-5,590,229 bekannt.

### STAND DER TECHNIK

Faseroptische Netzwerke finden wegen ihrer hohen Uebertragungskapazität und ihrer immanenten Störsicherheit zunehmend Anwendung in den unterschiedlichen technischen Bereichen wie z.B. der kommunikationstechnischen Infrastruktur von Gebäuden und dgl.. Der sicheren und einfach zu handhabenden, lösbaren Verbindung zwischen verschiedenen faseroptischen Kabeln mittels optischen Steckverbindern kommt dabei eine massgebliche Bedeutung zu. Da die Komplexität der Kommunikationsaufgaben ständig wächst, ist es erforderlich, immer mehr Kabel miteinander zu verbinden und entsprechend immer mehr solcher Steckverbindungen auf engem Raum unterzubringen. Dies ist insbesondere der Fall, wenn aus Kapazitätsgründen anstelle eines Kabels mehrere parallele Kabel eingesetzt werden und entsprechend gleichzeitig verbunden werden müssen.

Eine sehr einfache Methode des Uebergangs von einer einfachen (Simplex-) zu einer doppelten (Duplex-) Steckverbindung besteht darin, zwei herkömmliche Simplex-Steckverbinder mit geeigneten Verbindungsmitteln zu einem Duplex-Steckverbinder zusammenzufassen. Beispiele für eine derartige Lösung sind in der US-A-5,528,712 oder der US-A-5,343,547 offenbart. Ein derartiger Duplex-Steckverbinder hat zwar den Vorteil, dass er auf sehr einfache Weise aus bereits vorhandenen Simplex-Steckverbindern aufgebaut werden kann. Nachteilig ist jedoch, dass mit dieser Art von Steckverbindern keinerlei Platz eingespart wird, sondern lediglich die gleichzeitige Betätigung zweier ansonsten unveränderter Simplex-Steckverbinder sichergestellt wird.

Es sind andererseits bereits mehrfach sehr kompakte, platzsparende optische Mehrfach-Steckverbinder vorgeschlagen worden, bei denen die Fasern mehrerer faseroptischer Kabel oder von Mehrfaserkabeln in einer einzigen Ferrule eines Steckverbinders enden und bei Betätigung des Steckverbinders entsprechend gleichzeitig verbunden werden. In der US-A-5,727,101 enthält die eine, zylindrische Ferrule des Steckverbinders zwei zentrale Bohrungen für die Aufnahme zweier optischer Fasern. In der US-A-5,799,122 ist eine flache Ferrule mit rechteckigem Querschnitt vorgesehen, in der in einer Reihe nebeneinander eine Mehrzahl von Bohrungen für die Aufnahme von Faserenden angeordnet sind. In der US-A-5,896,479 wird ebenfalls eine flache, im wesentlichen rechteckige Ferrule eingesetzt, die in zwei trennbare Hälften unterteilt ist, auf denen jeweils parallele, V-formige Rillen zur Aufnahme der Faserenden angebracht sind. Mit dieser Art von Mehrfach-Steckverbindern lässt sich auf engstem Raum eine Vielzahl von einzelnen optischen Fasern verbinden. Nachteilig ist jedoch die vergleichsweise aufwendige Montage der Fasernden in den Ferrulen sowie eine mangelnde Flexibilität im Einsatz, weil die Ferrulen jeweils Einzelanfertigungen für eine bestimmte Anzahl von Fasern sind. Darüber hinaus ist es bei den Lösungen mit den V-förmigen Rillen von Nachteil, dass die Fasern im Vergleich zu den nachfolgend beschriebenen Lösungen aus dem Stand der Technik (den sog. Ferrule-Sleeve-Ferrule-Systemen) nicht ganz einfach zu zentrieren sind.

Eine weitere Lösung für Mehrfach-Steckverbinder ist in den eingangs genannten Druckschriften US-A-5,590,229 und US-A-5,436,993 beschrieben. Bei dieser Lösung im Rahmen eines Ferrule-Sleeve-Ferrule-Systems wird für jede einzelne Faser des Steckverbinders eine eigene Ferrule eingesetzt. Die verschiedenen Ferrulen sind - einzeln gefedert - in einem gemeinsamen Trägerkörper (88, 90 in Fig. 4 der US-A-5,590,229 bzw. 31 in der US-A-5,436,993) gelagert und gehalten. Obgleich bei dieser Lösung die Montage der optischen Faserenden in den Ferrulen gegenüber den o.g. Ferrulen mit Mehrfachbohrungen deutlich einfacher ist, fehlt auch hier die in vielen Fällen vorteilhafte Flexibilität, weil die Trägerkörper jeweils Einzelanfertigungen für eine bestimmte Anzahl von Ferrulen bzw. Fasern sind.

Die EP-A-0 689 069 offenbart (Fig. 3) einen herkömmlichen faseroptischen Steckverbinder (10) mit einem aus zwei Teilen zusammengesetzten, vollständig geschlossenem Gehäuse. Gemäss Fig. 4 und 5 können mehrere dieser Steckverbinder paarweise lösbar in einer dafür vorgesehenen Kupplung mit interner Führungshülse verbunden werden. Die in eine Wandöffnung eingeschnappte Kupplung besteht aus zwei Teilen, die miteinander fest verbunden werden.

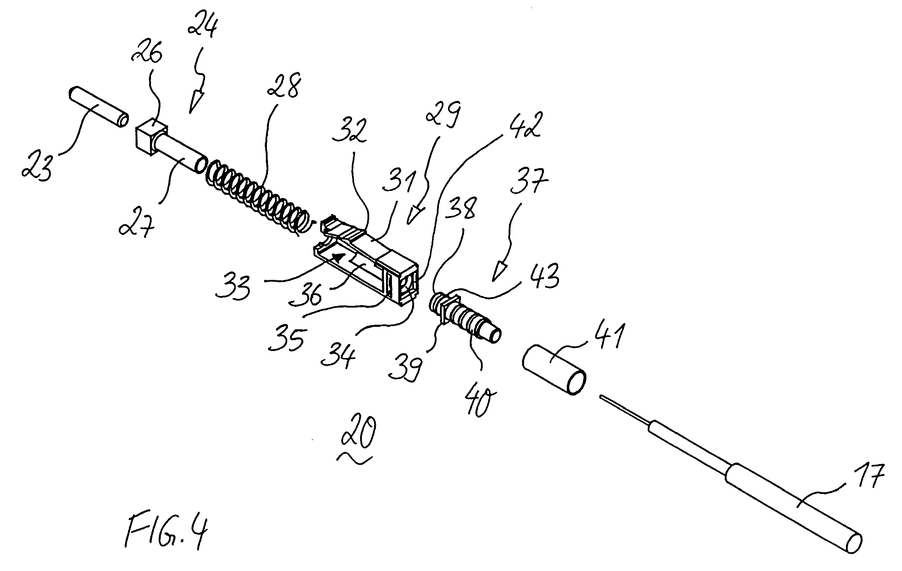

In der EP-A1-0 430 107 sind (z.B. Fig. 4 und 8) Steckverbindersysteme offenbart, bei denen herkömmliche Steckverbinder mit geschlossenem Steckergehäuse in paralleler Reihung zu einem Mehrfach-Steckverbinder zusammengefasst sind. In beiden Fällen verhindern die herkömmlichen allseitig geschlossenen Gehäuse der einzelnen Steckverbinder eine Erhöhung der linearen Steckverbinderdichte in einem Mehrfachsteckverbinder.

### DARSTELLUNG DER ERFINDUNG

Es ist daher Aufgabe der Erfindung, einen kompakten optischen Steckverbinder zum gleichzeitigen Verbinden einer Mehrzahl von faseroptischen Kabeln zu schaffen, der die Nachteile der bekannten Lösungen vermeidet und sich insbesondere durch eine einfache Montage der optischen Fasern sowie eine hohe Flexibilität in der Anwendung auszeichnet.

Die Aufgabe wird durch die Gesamtheit der Merkmale der Ansprüche 1 und 12 gelöst. Der Kern der Erfindung besteht darin, einzelne gefederte Ferrulen für jede der Fasern vorzusehen, diese gefederten Ferrulen in separaten Einsätzen vorzumontieren und zur Bildung eines Mehrfach-Steckverbinders mehrere dieser Einsätze nebeneinander in einem gemeinsamen Gehäuse unterzubringen. Durch die Verwendung von Einzelferrulen wird die Montage der Faserenden erleichtert und gleichzeitig eine hohe Zentriergenauigkeit der Fasern erreicht. Durch die Vormontage der Ferrulen in separaten Einsätzen wird eine verbesserte Flexibilität erreicht, weil auf einfache Weise unterschiedliche Anzahlen von Einsätzen zu einem Steckverbinder zusammengefasst werden können. Aufgrund der vormontierten Einsätze kann auf Zwischen- oder Trennwände zwischen den Einsätzen im Gehäuse verzichtet werden.

Eine erste bevorzugte Ausgestaltung der Erfindung ist dadurch gekennzeichnet, dass die Einsätze in dem gemeinsamen Gehäuse lösbar befestigt sind, und dass die Einsätze in dem gemeinsamen Gehäuse einrastend befestigt sind. Hierdurch wird bei gleichzeitig stabilem Aufbau des Steckverbinders eine vereinfachte Montage und Demontage der Einsätze ermöglicht.

Eine zweite bevorzugte Ausgestaltung des erfindungsgemässen Steckverbinders zeichnet sich dadurch aus, dass die Ferrule in ein im Innenraum der Halterung angeordnetes, vorzugsweise aus einem Metall bestehendes, Innenteil eingesetzt ist, dass das Innenteil eine Führungshülse zur Führung des Federelementes aufweist, und dass am Innenteil Mittel vorgesehen sind, welche eine Justierung des Innenteils durch Drehung um seine Längsachse in unterschiedliche Winkelstellungen ermöglichen. Bevorzugt umfassen die Justiermittel einen Justierabschnitt mit quadratischem Querschnitt, welcher sich im vorderen Bereich des Innenteils an die Führungshülse anschliesst und eine Aufnahmebohrung zur Aufnahme der Ferrule aufweist, und an welchem sich das Federelement mit seinem vorderen Ende abstützt. Hierdurch wird mit wenigen Bauteilen eine stabile und justierbare gefederte Lagerung der Ferrule im Einsatz erreicht.

Die lösbare und einrastende Halterung der Einsätze im Gehäuse lässt sich gemäss einer weiteren Ausgestaltung besonders einfach realisieren, wenn bei den Halterungen jeweils eine Seitenwand einen federnden Abschnitt mit einer darauf angeordneten Raststufe aufweist, und in dem gemeinsamen Gehäuse Einrastöffnungen vorgesehen sind, in welche die Halterungen beim Einschieben der Einsätze in das Gehäuse mit ihren Raststufen einrasten.

Eine bevorzugte Ausgestaltung der erfindungsgemässen Einsätze ist dadurch gekennzeichnet, dass die Ferrule in ein im Innenraum der Halterung angeordnetes, vorzugsweise aus einem Metall bestehendes, Innenteil eingesetzt ist, dass das Innenteil eine Führungshülse zur Führung des Federelementes aufweist, dass am Innenteil Mittel vorgesehen sind, welche eine Justierung des Innenteils durch Drehung um seine Längsachse in unterschiedliche Winkelstellungen ermöglichen, und dass die Justiermittel einen Justierabschnitt mit quadratischem Querschnitt umfassen, welcher sich im vorderen Bereich des Innenteils an die Führungshülse anschliesst und eine Aufnahmebohrung zur Aufnahme der Ferrule aufweist, und an welchem sich das Federelement mit seinem vorderen Ende abstützt.

Weitere Ausführungsformen ergeben sich aus den abhängigen Ansprüchen.

### KURZE ERLÄUTERUNG DER FIGUREN

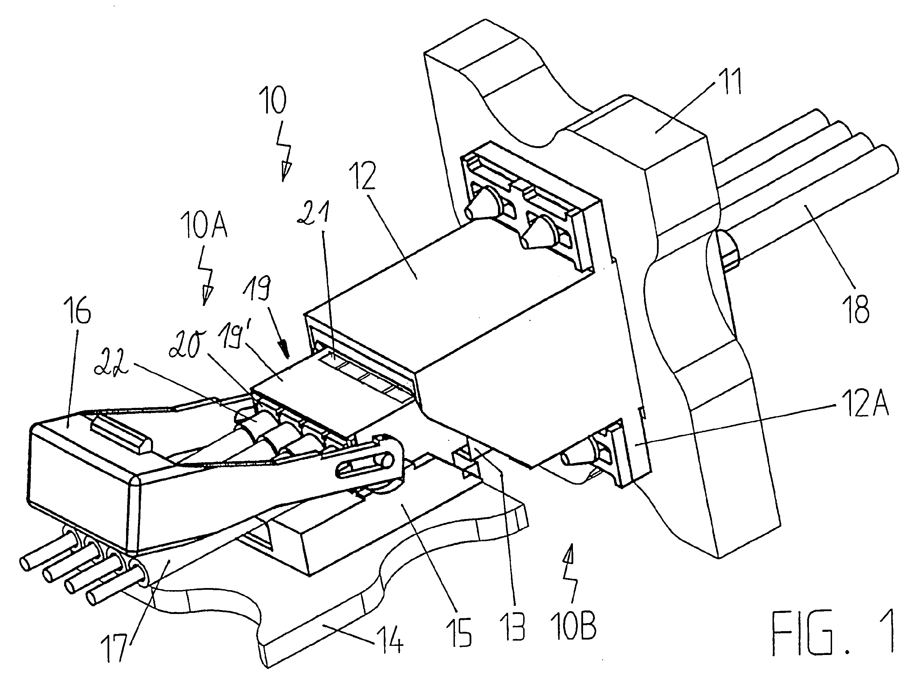

Die Erfindung soll nachfolgend anhand von Ausführungsbeispielen im Zusammenhang mit der Zeichnung näher erläutert werden. Es zeigen
- Fig. 1: in einer perspektivischen Seitenansicht ein bevorzugtes Ausführungsbeispiel eines Steckverbinders nach der Erfindung in Form eines sogenannten "backplane connectors", bei dem (vier) faser-optische Kabel einer Schaltungsplatte über einen Stecker und eine Buchse mit entsprechenden Kabeln einer Montagerückwand verbunden werden;

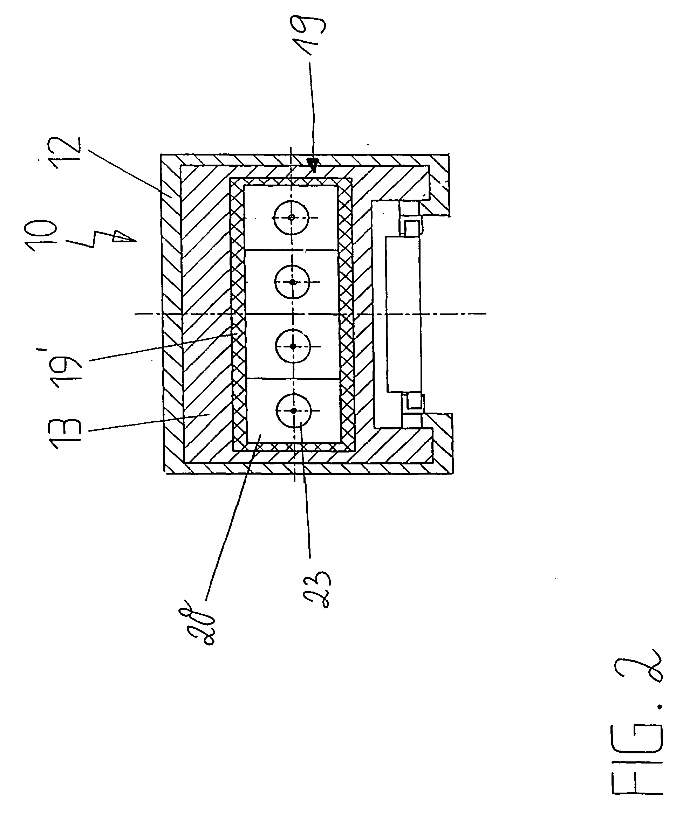

- Fig. 2: im Querschnitt den in der Buchse steckenden Stecker gemäss Fig. 1 mit seinen vier nebeneinander aufgereihten Einsätzen und Ferrulen;

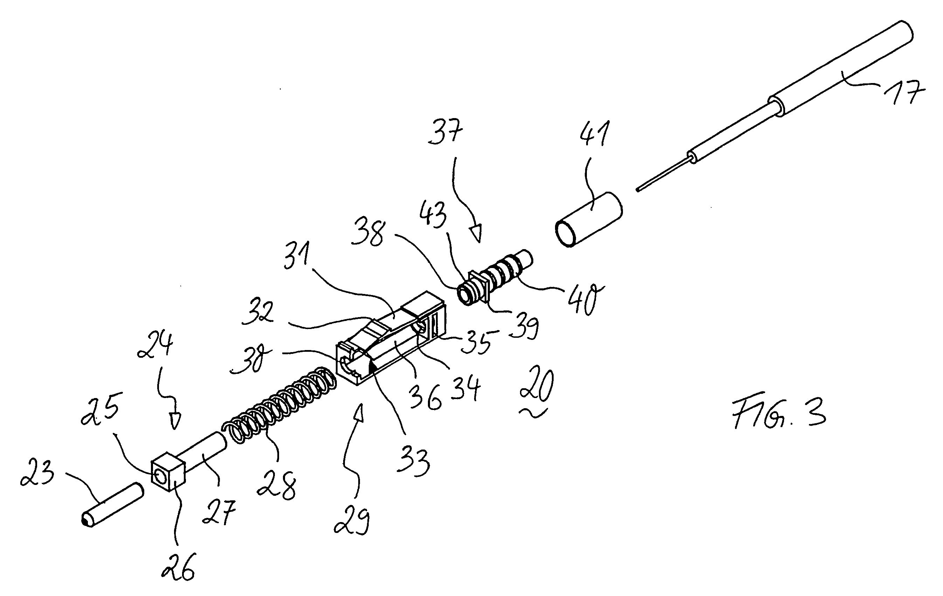

- Fig. 3: in einer perspektivischen Explosionsdarstellung schräg von vorne gesehen den Aufbau eines Einsatzes, wie er im Beispiel der Fig. 1 eingesetzt ist; und
- Fig. 4: den Einsatz gemäss Fig. 3 schräg von hinten gesehen.

### WEGE ZUR AUSFÜHRUNG DER ERFINDUNG

In Fig. 1 ist in einer perspektivischen Seitenansicht ein bevorzugtes Ausführungsbeispiel eines Steckverbinders nach der Erfindung in Form eines sogenannten "backplane connectors" wiedergegeben. Der im eingesteckten Zustand dargestellte optische Steckverbinder 10 verbindet im vorliegenden Beispiel lösbar vier nebeneinander angeordnete faseroptische Kabel 17 einer Schaltungsplatte ("board") 14 mit vier entsprechenden optischen Kabeln 18, die von einer Montagerückwand ("backplane") 11 nach aussen wegführen. Die Schaltungsplatte 14 ist dabei rechtwinklig zur Montagerückwand 11 orientiert. Der optische Steckverbinder 10 umfasst einen auf der Schaltungsplatte 11 am Rande fest montierten Stecker 10A und zum Stecker passende Buchse 10B mit einem Innengehäuse 13, welches in einem Aussengehäuse 12 in Steckrichtung verschiebbar gelagert ist. Das Aussengehäuse 12 ist dabei mittels eines Flansches 12A in einer Oeffnung in der Montagerückwand 11 befestigt (z.B. verschraubt). Der Stecker 10A hat einen Körper 15, der am einen Ende in ein Einsteckteil 19 übergeht. Mit diesem Einsteckteil 19 steckt er in einer entsprechenden Einstecköffnung der Buchse 10B. Der Stecker 10A und die darin befindlichen Enden der faseroptischen Kabel 17 können durch eine Schutzklappe 16, die am Körper 15 schwenkbar gelagert ist und vor dem Einstecken nach hinten zurückgeschwenkt wird, vor Verschmutzung oder Beschädigung geschützt und gegen ein unbeabsichtigtes Austreten von Strahlung gesichert werden.

Erfindungsgemäss ist nun jedem der vier faseroptischen Kabel 17 innerhalb des Steckers 10A bzw. des Einsteckteils 19 ein eigenständiger Einsatz 20 zugeordnet, der die zugehörige gefederte Ferrule für die Befestigung des freien Faserendes enthält und zusammen mit den anderen gleichartigen Einsätzen einrastend in einem gemeinsamen Gehäuse 19' des Einsteckteils 19 gehalten ist. Zum Zwecke des Einrastens sind im Beispiel der Fig. 1 auf der Oberseite des Gehäuses nebeneinander vier Einrastöffnungen 21 vorgesehen. Die Lage der Einsätze 20 mit ihren Ferrulen 23 im Gehäuse 19' ist aus Fig. 2 ersichtlich.

Ein einzelner vormontierbarer Einsatz 20 umfasst gemäss Fig. 3 und 4 die Ferrule 23 (Material: z.B. Zirkonia; Durchmesser: z.B. 1,25 mm), ein Innenteil 24 (aus Metall), ein Federelement 28 in Form einer Spiralfeder, eine rahmenförmige Halterung 29 (Spritzgussteil aus Kunststoff), einen Krimphals 37 (aus Metall) und eine Krimphülse 41 (ebenfalls aus Metall). Es versteht sich von selbst, dass anstelle der Spiralfeder auch ein anderes Federelement, z.B. ein Gummischlauch, eingesetzt werden kann. Die Halterung 29 bildet das Grundbauteil des Einsatzes 20 und gibt dem Einsatz 20 die notwendige mechanische Stabilität. Die übrigen Bauteile 23, 24, 28, 37 und 41 sind in der Halterung 29 untergebracht bzw. an der Halterung 29 angebracht. Die Halterung 29 hat die Form eines in Steckrichtung länglichen, rechteckigen, einen Innenraum 33 umschliessenden Rahmens. In der vorderen Wand (Vorderseite) des Rahmens ist eine Oeffnung 30 für die Ferrule 23 vorgesehen. In der Rückwand (Rückseite) ist eine Durchgangsbohrung 34 zur Durchführung des faseroptischen Kabels 17 vorgesehen, sowie ein rechteckiger Aufnahmeraum 35. Auf der Aussenseite der Rückwand ist eine quadratische Aussparung 42 (Fig. 4) angeordnet.

Der Krimphals 37 umfasst eine quadratische Halteplatte 39, an die vorn und hinten in axialer Richtung jeweils ein Rohrstutzen 38 bzw. 40 anschliesst. Der vordere Rohrstutzen 38 trägt zusätzlich eine konzentrische Ringwulst 43. Beim Einpressen des Krimphalses 37 in die Durchgangsbohrung 34 der Halterung 29 rastet das Rohrstück 38 mit seiner Ringwulst 43 im Aufnahmeraum 35 ein. Gleichzeitig kommt die Halteplatte 39 in der Aussparung 42 zu liegen und sichert so den in die Halterung 29 eingepressten Krimphals 37 gegen Verdrehen durch eine am Kabel 17 angreifende Torsionskraft. Der beim eingepressten Krimphals 37 in den Innenraum 33 hineinragende vordere Rohrstutzen 38 dient zur Abstützung der in den Innenraum 33 eingesetzten Spiralfeder 28. Der aus der Halterung 29 nach hinten herausragende hintere Rohrstutzen 40 dient zum Festmachen der Zugentlastung des faseroptischen Kabels 17 mittels der darübergeschobenen und anschliessend verpressten Krimphülse 41.

Die Ferrule 23, das Innenteil 24 und die Spiralfeder 28 sind im Innenraum 33 der Halterung 29 gelagert. Das Innenteil 24 umfasst eine Führungshülse 27 zur Führung der Spiralfeder 28 sowie einen Justierabschnitt 26 mit quadratischem Querschnitt. Der Justierabschnitt 26 schliesst sich im vorderen Bereich des Innenteils 24 an die Führungshülse 27 an und weist eine Aufnahmebohrung 25 zur Aufnahme der Ferrule 23 auf. Die über die Führungshülse 27 gezogene Spiralfeder 28 stützt sich mit ihrem vorderen Ende an der Rückseite des Justierabschnittes 26 ab. Die Ferrule 23 wird in die Aufnahmebohrung 25 am Innenteil 24 eingepresst und zusammen mit dem Innenteil 24 und der aufgeschobenen Spiralfeder 28 von der offenen Seite der Halterung her in den Innenraum 33 eingesetzt. Damit die Ferrule 23 ungehindert ihren Platz in der vorderen Oeffnung 30 einnehmen kann, ist diese Oeffnung 30 zur Seite hin offen ausgebildet. Das Zusammenspiel zwischen dem quadratischen Justierabschnitt 26 und dem rechteckigen Innenraum 33 ermöglicht eine Justierung des Innenteils 24 (bzw. der Faser) durch Drehung um seine Längsachse in unterschiedliche Winkelstellungen (in 4 Schritten von jeweils 90°). Die Spiralfeder 28 drückt dabei das Innenteil an die Vorderseite der Halterung 29, so dass die justierte Position gehalten werden kann. Um der Spiralfeder 28 im Innenraum 33 einen zusätzlichen seitlichen Halt zu geben, können auf der Innenseite der Längswände der Halterung längliche Begrenzungselemente 36 angeformt sein.

Es ist aber auch denkbar, anstelle der rechteckigen bzw. quadratischen Konfiguration mit ihrer Justierbarkeit in 90°-Schritten beispielsweise eine sechseckige Konfiguration mit einer Justierbarkeit in 60°-Schritten vorzusehen. Die Einsätze könnten dann entsprechend ein sechseckiges Querschnittsprofil aufweisen und dann in einer Art Wabenstruktur nebeneinander und übereinander angeordnet werden, um so z.B. ein kreisrundes Gehäuse eines Steckverbinders optimal auszufüllen.

Damit die Einsätze 20 in das gemeinsame Gehäuse 19' einrastend eingesetzt werden können, weist bei jeder Halterung 29 jeweils die obenliegende Seitenwand einen leicht V-förmig nach aussen herausstehenden, federnden Abschnitt 31 mit einer darauf angeordneten Raststufe 32 auf, die beim Einschieben des Einsatzes 20 in die zugehörige Einrastöffnung 21 am Gehäuse 19' lösbar einrastet. Durch Herunterdrücken der Raststufe 32 kann der Einsatz 20 dann wieder aus dem Gehäuse 19' nach hinten herausgezogen werden.

Durch die minimalen Abmessungen aller Komponenten kann mit dem Einsatz 20 eine optimale Anreihbarkeit erreicht werden. Die Halterung 29 kann zusätzlich vorn auf der Innenseite einen (in der Fig. 3 nicht gezeigten) Anzug (Anschrägung) haben, so dass das Innenteil 24 zwar Spiel hat, jedoch mit der Spiralfeder in die Anschrägung gedrückt absolut spielfrei gehalten wird. Mit der Einschnappvorrichtung 31, 32 kann die Halterung 29 und damit der ganze Einsatz 20 in ein nahezu beliebig ausgestaltetes Gehäuse 19' gesteckt werden, so dass Mehrfachverbindungen mit nur einem Steckergehäuse in beliebiger Variation möglich sind.

Die Erfindung ist oben am Beispiel eines "backplane connectors" erläutert worden, bei dem ein Stecker ("Male") und eine Buchse ("Female") vorhanden sind. Es versteht sich von selbst, dass das erfindungsgemässe Konzept auch und gerade für Steckverbinder geeignet sind, die - wie in der US-A-5,436,993 dargestellt - aus zwei gleichartigen Steckern und einer dazwischenliegenden Kupplung (Ferrule-Sleeve-Ferrule-System) bestehen.

### BEZUGSZEICHENLISTE

- 10: optischer Steckverbinder
- 10A: Stecker
- 10B: Buchse
- 11: Montagerückwand
- 12: Aussengehäuse (Buchse)
- 12A: Flansch
- 13: Innengehäuse (Buchse)
- 14: Schaltungsplatte
- 15: Körper (Stecker)
- 16: Schutzklappe (Stecker)
- 17,18: faseroptisches Kabel
- 19: Einsteckteil
- 19': Gehäuse (Einsteckteil)
- 20: Einsatz
- 21: Einrastöffnung
- 22: Krimphülse
- 23: Ferrule
- 24: Innenteil
- 25: Aufnahmebohrung
- 26: Justierabschnitt (quadratisch)
- 27: Führungshülse
- 28: Federelement bzw. Spiralfeder
- 29: Halterung (rahmenförmig)
- 30: Oeffnung
- 31: federnder Abschnitt
- 32: Raststufe
- 33: Innenraum
- 34: Durchgangsbohrung
- 35: Aufnahmeraum (rechteckig)
- 36: Begrenzungselement
- 37: Krimphals
- 38,40: Rohrstutzen
- 39: Halteplatte
- 41: Krimphülse
- 42: Aussparung (quadratisch)
- 43: Ringwulst

## Patentansprüche

1. Optischer Steckverbinder (10) zum gleichzeitigen Verbinden einer Mehrzahl von faseroptischen Kabeln (17, 18), umfassend wenigstens einen Stecker (10A), in welchem eine der Anzahl der zu verbindenden faseroptischen Kabel (17) entsprechende Anzahl von Ferrulen (23) in Steckrichtung zurückfedernd gelagert sind, wobei jedes der zu verbindenden faseroptischen Kabel (17) mit seiner optischen Faser in einer zugehörigen Ferrule endet und dort befestigt ist, wobei jede der Ferrulen (23) in einem separaten Einsatz (20) mittels eines Federelements (28), insbesondere in Form einer Spiralfeder, zurückfedemd gelagert sind, und dass die Einsätze (20) innerhalb des wenigstens einen Steckers (10A) in einem gemeinsamen Gehäuse (19') nebeneinander angeordnet und fixiert sind, **dadurch gekennzeichnet, dass** die Einsätze (20) jeweils eine, vorzugsweise aus einem Kunststoff bestehende, Halterung (29) in Form eines in Steckrichtung länglichen, rechteckigen, einen Innenraum (33) umschliessenden Rahmens aufweisen, in dessen Vorderseite eine Oeffnung (30) für die Ferrule (23) und in dessen Rückseite eine Durchgangsbohrung (34) zur Durchführung des faseroptischen Kabels (17) vorgesehen sind, und dass Federelement (28) zur Federung der Ferrule (23) im Innenraum (33) der Halterung gelagert ist.

2. Optischer Steckverbinder nach Anspruch 1, **dadurch gekennzeichnet, dass** die Einsätze (20) in dem gemeinsamen Gehäuse (19') lösbar befestigt sind.

3. Optischer Steckverbinder nach Anspruch 2, **dadurch gekennzeichnet, dass** die Einsätze (20) in dem gemeinsamen Gehäuse (19') einrastend befestigt sind.

4. Optischer Steckverbinder nach einem der Ansprüche 1 bis 3, **dadurch gekennzeichnet, dass** die Einsätze (20) im gemeinsamen Gehäuse (19') in einer Reihe nebeneinander angeordnet sind.

5. Optischer Steckverbinder nach einem der Ansprüche 1 bis 4, **dadurch gekennzeichnet, dass** er neben dem wenigstens einen Stecker (10A) eine zugehörige Buchse (10B) zum Einstecken des Steckers (10A) umfasst.

6. Optischer Steckverbinder nach einem der Ansprüche 1 bis 4, **dadurch gekennzeichnet, dass** er zwei gleichartige Stecker und eine Kupplung umfasst, in welche die Stecker zum Verbinden der faseroptischen Kabel von beiden Seiten einsteckbar sind.

7. Optischer Steckverbinder nach Anspruch 1, **dadurch gekennzeichnet, dass** zur Vereinfachung der Montage die Oeffnung (30) für die Ferrule (23) zur Seite hin offen ausgebildet ist.

8. Optischer Steckverbinder nach Anspruch 1, **dadurch gekennzeichnet, dass** die Ferrule (23) in ein im Innenraum (33) der Halterung (29) angeordnetes, vorzugsweise aus einem Metall bestehendes, Innenteil (24) eingesetzt ist, dass das Innenteil (24) eine Führungshülse (27) zur Führung des Federelementes (28) aufweist, und dass am Innenteil Mittel (26) vorgesehen sind, welche eine Justierung des Innenteils (24) durch Drehung um seine Längsachse in unterschiedliche Winkelstellungen ermöglichen.

9. Optischer Steckverbinder nach Anspruch 8, **dadurch gekennzeichnet, dass** die Justiermittel einen Justierabschnitt (26) mit quadratischem Querschnitt umfassen, welcher sich im vorderen Bereich des Innenteils (24) an die Führungshülse (27) anschliesst und eine Aufnahmebohrung (25) zur Aufnahme der Ferrule (23) aufweist, und an welchem sich das Federelement (28) mit seinem vorderen Ende abstützt.

10. Optischer Steckverbinder nach einem der Ansprüche 6 bis 9, **dadurch gekennzeichnet, dass** bei den Halterungen (29) jeweils eine Seitenwand einen federnden Abschnitt (31) mit einer darauf angeordneten Raststufe (32) aufweist, und dass in dem gemeinsamen Gehäuse (19') Einrastöffnungen (21) vorgesehen sind, in welche die Halterungen (29) beim Einschieben der Einsätze (20) in das Gehäuse (19') mit ihren Raststufen (32) einrasten.

11. Optischer Steckverbinder nach einem der Ansprüche 6 bis 10, **dadurch gekennzeichnet, dass** zur Befestigung des faseroptischen Kabels (17) an der Halterung (29) ein, vorzugsweise aus einem Metall bestehender, Krimphals (37) vorgesehen ist, welcher in die Durchgangsbohrung (34) der Halterung (29) einschnappend einpressbar ist, und einen aus der Halterung (29) nach hinten herausragenden Rohrstutzen (40) zur Befestigung einer Krimphülse (41) aufweist.

12. Einsatz für einen optischen Steckverbinder (10) nach Anspruch 1, **dadurch gekennzeichnet, dass** der Einsatz (20) jeweils eine, vorzugsweise aus einem Kunststoff bestehende, Halterung (29) in Form eines in Steckrichtung länglichen, rechteckigen, einen Innenraum (33) umschliessenden Rahmens aufweist, in dessen Vorderseite eine Oeffnung (30) für die Ferrule (23) und in dessen Rückseite eine Durchgangsbohrung (34) zur Durchführung des faseroptischen Kabels (17) vorgesehen sind, und dass zur Federung der Ferrule (23) im Innenraum (33) der Halterung ein Federelement (28), insbesondere in Form einer Spiralfeder, gelagert ist.

13. Einsatz nach Anspruch 12, **dadurch gekennzeichnet, dass** die Ferrule (23) in ein im Innenraum (33) der Halterung (29) angeordnetes, vorzugsweise aus einem Metall bestehendes, Innenteil (24) eingesetzt ist, dass das Innenteil (24) eine Führungshülse (27) zur Führung des Federelementes (28) aufweist, und dass am Innenteil Mittel (26) vorgesehen sind, welche eine Justierung des Innenteils (24) durch Drehung um seine Längsachse in unterschiedliche Winkelstellungen ermöglichen.

14. Einsatz nach Anspruch 13, **dadurch gekennzeichnet, dass** die Justiermittel einen Justierabschnitt (26) mit quadratischem Querschnitt umfassen, welcher sich im vorderen Bereich des Innenteils (24) an die Führungshülse (27) anschliesst und eine Aufnahmebohrung (25) zur Aufnahme der Ferrule (23) aufweist, und an welchem sich das Federelement (28) mit seinem vorderen Ende abstützt.

15. Einsatz nach einem der Ansprüche 12 bis 14, **dadurch gekennzeichnet, dass** zur Befestigung des faseroptischen Kabels (17) an der Halterung (29) ein, vorzugsweise aus einem Metall bestehender, Krimphals (37) vorgesehen ist, welcher in die Durchgangsbohrung (34) der Halterung (29) einschnappend einpressbar ist, und einen aus der Halterung (29) nach hinten herausragenden Rohrstutzen (40) zur Befestigung einer Krimphülse (41) aufweist.

## Claims

1. Optical plug-in connector (10) for simultaneously connecting a plurality of fibreoptic cables (17, 18), comprising at least one plug (10A), in which a number of ferrules (23), which corresponds to the number of fibreoptic cables (17) to be connected, are mounted so as to spring back in the plug-in direction, each of the fibreoptic cables (17) to be connected ending with its optical fibre in an associated ferrule and being fixed there, each of the ferrules (23) being mounted in a separate insert (20) so as to spring back by means of a spring element (28), in particular in the form of a helical spring, and the inserts (20) being arranged and fixed next to one another within the at least one plug (10A) in a common housing (19'), **characterized in that** the inserts (20) each have a holder (29) which is preferably made from a plastic and is in the form of a rectangular frame, which is elongate in the plug-in direction and surrounds an interior space (33), an opening (30) for the ferrule (23) being provided in the front side of the frame, and a through-hole (34) for passing through the fibreoptic cable (17) being provided in the rear side of the frame, and the spring element (28) for spring-mounting the ferrule (23) is mounted in the interior space (33) of the holder.

2. Optical plug-in connector according to Claim 1, **characterized in that** the inserts (20) are fixed detachably in the common housing (19').

3. Optical plug-in connector according to Claim 2, **characterized in that** the inserts (20) are fixed so as to latch in in the common housing (19').

4. Optical plug-in connector according to one of Claims 1 to 3, **characterized in that** the inserts (20) are arranged in a row next to one another in the common housing (19').

5. Optical plug-in connector according to one of Claims 1 to 4, **characterized in that** it comprises an associated socket (10B) for the insertion of the plug (10A), in addition to the at least one plug (10A).

6. Optical plug-in connector according to one of Claims 1 to 4, **characterized in that** it comprises two identical plugs and a coupler, into which the plugs can be inserted from both sides for the purpose of connecting the fibreoptic cables.

7. Optical plug-in connector according to Claim 1, **characterized in that**, in order to facilitate assembly, the opening (30) for the ferrule (23) is open towards the side.

8. Optical plug-in connector according to Claim 1, **characterized in that** the ferrule (23) is inserted into an inner part (24), which is arranged in the interior space (33) of the holder (29) and is preferably made from a metal, **in that** the inner part (24) has a guide sleeve (27) for the purpose of guiding the spring element (28), and **in that** means (26) are provided on the inner part which allow for an adjustment of the inner part (24) by means of it being rotated about its longitudinal axis into different angular positions.

9. Optical plug-in connector according to Claim 8, **characterized in that** the adjustment means comprise an adjustment section (26) having a square cross section which adjoins the guide sleeve (27) in the front region of the inner part (24) and has a receiving hole (25) for the purpose of receiving the ferrule (23) and on which the spring element (28) is supported with its front end.

10. Optical plug-in connector according to one of Claims 6 to 9, **characterized in that**, in the case of the holders (29), in each case one side wall has a sprung section (31) having a latching step (32) arranged thereon, and **in that** latch-in openings (21) are provided in the common housing (19'), into which openings the holders (29) latch in with their latching steps (32) when the inserts (20) are inserted into the housing (19').

11. Optical plug-in connector according to one of Claims 6 to 10, **characterized in that**, in order to fix the fibreoptic cable (17) to the holder (29), a crimping neck (37) is provided which is preferably made from a metal, can be pressed into the through-hole (34) in the holder (29) so as to snap in and has a tube stub (40) protruding rearwards out of the holder (29) for the purpose of fixing a crimping sleeve (41).

12. Insert for an optical plug-in connector (10) according to Claim 1, **characterized in that** the insert (20) in each case has a holder (29) which is preferably made from a plastic and is in the form of a rectangular frame, which is elongate in the plug-in direction and surrounds an interior space (33), an opening (30) for the ferrule (23) being provided in the front side of the frame, and a through-hole (34) for passing through the fibreoptic cable (17) being provided in the rear side of the frame, and **in that**, in order to springmount the ferrule (23) in the interior space (33) of the holder, a spring element (28), in particular in the form of a helical spring, is mounted.

13. Insert according to Claim 12, **characterized in that** the ferrule (23) is inserted into an inner part (24) which is arranged in the interior space (33) of the holder (29) and is preferably made from a metal, **in that** the inner part (24) has a guide sleeve (27) for the purpose of guiding the spring element (28), and **in that** means (26) are provided on the inner part which allow for an adjustment of the inner part (24) by means of it being rotated about its longitudinal axis into different angular positions.

14. Insert according to Claim 13, **characterized in that** the adjustment means comprise an adjustment section (26) having a square cross section which adjoins the guide sleeve (27) in the front region of the inner part (24) and has a receiving hole (25) for the purpose of receiving the ferrule (23) and on which the spring element (28) is supported with its front end.

15. Insert according to one of Claims 12 to 14,
**characterized in that**, in order to fix the fibreoptic cable (17) to the holder (29), a crimping neck (37) is provided which is preferably made from a metal, can be pressed into the through-hole (34) in the holder (29) so as to snap in and has a tube stub (40) protruding rearwards out of the holder (29) for the purpose of fixing a crimping sleeve (41).

## Revendications

1. Connecteur optique (10) pour la connexion simultanée d'une pluralité de câbles à fibres optiques (17, 18), comprenant au moins une fiche (10A), dans laquelle est monté, avec retour élastique dans la direction d'enfichage, un nombre de ferrules (23) correspondant au nombre des câbles à fibres optiques (17) à connecter, chacun des câbles à fibres optiques (17) à connecter se terminant avec sa fibre optique dans une ferrule associée et y étant fixé, chacune des ferrules (23) étant montée avec retour élastique dans un insert, séparé (20) au moyen d'un élément à ressort (28), notamment sous la forme d'un ressort spiral, et les inserts (20) étant disposés et fixés les uns à côté des autres à l'intérieur de l'au moins une fiche (10A) dans un boîtier commun (19'), **caractérisé en ce que** les inserts (20) présentent chacun une fixation (29) de préférence en plastique, en forme de cadre rectangulaire allongé dans la direction d'enfichage, renfermant un espace interne (33), dans le côté avant duquel est prévue une ouverture (30) pour la ferrule (23), et dans le côté arrière duquel est prévu un alésage traversant (34) pour le passage du câble à fibres optiques (17), et **en ce que** l'élément à ressort (28) est monté dans l'espace interne (33) de la fixation pour assurer le support élastique de la ferrule (23).

2. Connecteur optique selon la revendication 1, **caractérisé en ce que** les inserts (20) sont fixés de manière détachable dans le boîtier commun (19') .

3. Connecteur optique selon la revendication 2, **caractérisé en ce que** les inserts (20) sont fixés de manière à s'encliqueter dans le boîtier commun (19').

4. Connecteur optique selon l'une quelconque des revendications 1 à 3, **caractérisé en ce que** les inserts (20) sont disposés les uns à côté des autres en rangée dans le boîtier commun (19').

5. Connecteur optique selon l'une quelconque des revendications 1 à 4, **caractérisé en ce qu'**il comprend, en plus de l'au moins une fiche (10A), une embase (10B) associée pour l'enfichage de la fiche (10A) .

6. Connecteur optique selon l'une quelconque des revendications 1 à 4, **caractérisé en ce qu'**il comprend deux fiches de même type et un couplage, dans lequel les fiches peuvent être enfichées pour connecter les câbles à fibres optiques des deux côtés.

7. Connecteur optique selon la revendication 1, **caractérisé en ce que** pour faciliter le montage, l'ouverture (30) pour la ferrule (23) est réalisée de manière ouverte latéralement.

8. Connecteur optique selon la revendication 1, **caractérisé en ce que** la ferrule (23) est insérée dans une partie interne (24) disposée dans l'espace interne (33) de la fixation (29), de préférence en métal, **en ce que** la partie interne (24) présente une douille de guidage (27) pour le guidage de l'élément à ressort (28), et **en ce que** des moyens (26) sont prévus sur la partie interne pour permettre un ajustage de la partie interne (24) par rotation autour de son axe longitudinal dans différentes positions angulaires.

9. Connecteur optique selon la revendication 8, **caractérisé en ce que** les moyens d'ajustage comprennent une portion d'ajustage (26) de section transversale quadratique, qui se raccorde dans la région avant de la partie interne (24) à la douille de guidage (27) et qui présente un alésage de réception (25) pour recevoir la ferrule (23), et sur lequel s'appuie l'élément à ressort (28) avec son extrémité avant.

10. Connecteur optique selon l'une quelconque des revendications 6 à 9, **caractérisé en ce que** dans les fixations (29), à chaque fois une paroi latérale présente une portion élastique (31) avec un gradin d'encliquetage (32) disposé sur celle-ci, et **en ce que** des ouvertures d'encliquetage (21) sont prévues dans le boîtier commun (19'), dans lesquelles les fixations (29) s'encliquètent avec leurs gradins d'encliquetage (32) lors de l'enfoncement des inserts (20) dans le boîtier (19') .

11. Connecteur optique selon l'une quelconque des revendications 6 à 10, **caractérisé en ce que** pour la fixation du câble à fibres optiques (17) à la fixation (29), on prévoit un col de sertissage (37), de préférence en métal, qui peut être enfoncé par encliquetage dans l'alésage traversant (34) de la fixation (29) et qui présente un raccord tubulaire (40) saillant vers l'arrière hors de la fixation (29) pour la fixation d'une douille de sertissage (41).

12. Insert pour un connecteur optique (10) selon la revendication 1, **caractérisé en ce que** l'insert (20) présente à chaque fois une fixation (29) de préférence en plastique, en forme de cadre rectangulaire allongé dans la direction d'enfichage, renfermant un espace interne (33), dans le côté avant duquel est prévue une ouverture (30) pour la ferrule (23), et dans le côté arrière duquel est prévu un alésage traversant (34) pour le passage du câble à fibres optiques (17), et **en ce qu'**un élément à ressort (28), notamment sous la forme d'un ressort spiral, est monté dans l'espace interne (33) pour assurer le support élastique de la ferrule (23).

13. Insert selon la revendication 12, **caractérisé en ce que** la ferrule (23) est insérée dans une partie interne (24) disposée dans l'espace interne (33) de la fixation (29), de préférence en métal, **en ce que** la partie interne (24) présente une douille de guidage (27) pour le guidage de l'élément à ressort (28), et **en ce que** des moyens (26) sont prévus sur la partie interne pour permettre un ajustage de la partie interne (24) par rotation autour de son axe longitudinal dans différentes positions angulaires.

14. Insert selon la revendication 13, **caractérisé en ce que** les moyens d'ajustage comprennent une portion d'ajustage (26) de section transversale quadratique, qui se raccorde dans la région avant de la partie interne (24) à la douille de guidage (27) et qui présente un alésage de réception (25) pour recevoir la ferrule (23), et sur lequel s'appuie l'élément à ressort (28) avec son extrémité avant.

15. Insert selon l'une quelconque des revendications 12 à 14, **caractérisé en ce que** pour la fixation du câble à fibres optiques (17) à la fixation (29), on prévoit un col de sertissage (37), de préférence en métal, qui peut être enfoncé par encliquetage dans l'alésage traversant (34) de la fixation (29) et qui présente un raccord tubulaire (40) saillant vers l'arrière hors de la fixation (29) pour la fixation d'une douille de sertissage (41).
